# EUROPEAN PATENT APPLICATION

(11) **EP 2 804 387 A1**
(43) Date of publication of application: **19.11.2014**
(21) Application number: 13736252.1
(22) Date of filing: 14.01.2013
(51) Int. Cl.: H04N 21/414, H04N 21/435, H04N 21/60

(54) **SYSTEM FOR SYNCHRONIZING CONTENT TRANSMITTED TO A DIGITAL TV RECEIVER WITH MULTIPLE PORTABLE DEVICES WITH OR WITHOUT INTERNET ACCESS**

(30) Priority: 13.01.2012 BR 13000019
(71) Applicant: TQTVD Software Ltda, 20011-000 Rio de Janeiro - RJ (BR)
(72) Inventor: ESTEVAM DE BRITTO, David, CEP-24346-040 Niterói-RJ (BR); PERRONE, Hernan Rafael, CEP-20510-260 Rio de Janeiro - RJ (BR); SALES DE PAULA CAMPELO, Luiz David, CEP-22230-000 Rio de Janeiro - RJ (BR); BOQUIMPANI, Aguinaldo Rangel, CEP-20521-200 Rio de Janeiro (BR)
(74) Representative: Ahmad, Sheikh Shakeel
(86) International application number: PCT/BR2013/000019
(87) International publication number: WO 2013/104044

(57) **Abstract**

The present invention relates to a system that enables television viewers to receive an application or multimedia content in a portable device with a screen during the broadcasting of a television program, received through an interactive digital TV receiver, whether or not this receiver is connected to the Internet.

## Description

### Technical Field

The present invention relates to the field of electronics engineering and systems. More specifically describes a system allowing the television viewers to receive an application or multimedia content in a portable device with screen during the broadcasting of a television program, received through an interactive Digital TV receiver, whether this receiver is connected or not to the Internet.

### Background of the invention

An interactive Digital TV receiver allows the content received by radio frequency, when tuned into a channel, to be fully rendered according to the original programming set by the broadcaster. This content is a set which can have one or more videos, one or more audio tracks, textual or graphical information about the content, broadcaster's data, and interactive applications standardized according to a standard defined by ABNT on Brazil's case or similar bodies in other countries. This apparatus has the characteristic that it can be used by one or more television viewers/users simultaneously.

A portable device with screen is an apparatus which has hardware resources and its own operating system; it has a multifunctional profile, with its use being, in general, to access the internet, multimedia content display, e-mail, viewing and editing texts, playing games, etc.

Nowadays, we can see that more and more people who have portable devices use it simultaneously while they are watching the programming from a broadcaster.

There are several technological solutions which allow tuning or operating the content display in the portable device associated to the content that is being displayed on the Digital TV receiver. As examples of these solutions, we can mention:
- the identification of patterns or marks inserted on the audio of the TV program made by the remote device, which will retrieve the information associated to the identified patterns or marks on an Internet server to show to the user immediately. In this case, there aren't any kinds of connection between the Digital TV receiver and the portable device.
- using a specific purpose functionality, embedded in the Digital TV receiver. Such functionality is responsible for the discovery of devices in the local area network (LAN), identifying some patterns or extracting some specific information from the TV signal that allows identifying the broadcaster and/or program being received and forwarding to the portable devices this information so they can display the associated content recovered from a server in the Internet.

It can be noted that in the cases described above, the portable devices must access a service on the Internet, by submitting the extracted information or pattern to thereby identify the tuned program or TV channel and then retrieve the complementary information and contents. It can be said that all these mechanisms have in common the following procedures:
1) Recognition:
   1.1) Identifying a pattern on the Digital TV signal
   1.2) Checking a service provider available on the Internet to identify the tuned program or channel
2) Synchronization:
   2.1) Download from a server in the Internet the contents and/or information associated to the TV program/channel identified so it can be displayed on the portable device.

Additionally, there are solutions in the market which do synchronization with *secondscreens* or ACR (*automaticcontentrecognition*), using audio/video *fingerprinting*/*watermarking*; using some manual syncrhonization mechanisms such as inserting a code; or using some specific software components embedded in the TV receiver.

In the patent context and literature there are descriptions of content synchronization systems related to the Digital TV. Hereafter, we list a reference which circumscribes the invention, but not anticipating it or, not even, following it.

The document BR MU8601367-0 shows a system for simultaneous interaction of multiple television viewers with interactive Digital TV programs, which enables several television viewers to interact simultaneously with an interactive Digital TV program displayed on a TV set.

Coming from the research, there weren't found any documents anticipating or suggesting the teachings of the present invention, so that the solution proposed here, in the opinion of the present inventors, has news and inventive activity against the state of the art.

### Invention Summary

The innovations of the present invention differ significantly from the currently existing mechanisms.

The invention system comprises the following components:
- An interactive application for Digital TV - transmitted by a Digital TV broadcaster in its TV signal.
- A Digital TV receiver able to execute interactive applications compliant with digital TV standards - Interactive Digital TV receiver. The receiver receives and executes the interactive application. For this, the interactive Digital TV receiver must be tuned to the Digital TV service provided by the broadcaster.
- One or more mobile and/or portable devices - portable devices with screen, speakers and/or headsets, input mechanism (keyboard, touch screen, pointer device, etc.).
- A remote agent - an application compatible with the interactive application - executed in the portable device. This remote agent might be installed by the user in this portable device or embedded by the manufacturer. The remote agent execution can be started manually by the user or automatically.
- A local data communication network - local data network - in which the Interactive Digital TV receiver and the portable devices are connected. This local data network can, optionally, be connected to the Internet, allowing all devices to access external servers.

In a non-limiting way, the elements of this system show the following capacities:
- The interactive application, using the APIs available in the Interactive Digital TV receiver, identifies automatically the portable devices present in the local data network scope in which the Interactive Digital TV receiver and these devices are connected.
- The remote agent allows the portable device, in which is being executed, to be discovered by the interactive application.
- The interactive application establishes and/or allows establishing a communication - connection - with one or more remote agents in execution in one or more portable devices in order to:
   - Transfer and/or receive data content (applications and/or multimedia content); and/or
   - Send and/or receive commands
   - When available, transfer to the remote agent information that allows identifying the Interactive Digital TV receiver (as for example: manufacturer, model, serial number)
   - When available, transfer to the remote agent information that allows identifying the Interactive Digital TV receiver user (as for example: user/account identifier, name, age, e- mail, postal code, etc.)
- Whenever the interactive application is executing in more than one Interactive Digital TV receiver in the same local data network, the remote agent allows the user to choose which one to establish a connection.
- The interactive application continuously maintains the synchronization of the content received from the broadcaster with one or more portable devices connected to it.
- The remote agent executed in one or more portable devices interact, independently, with the user and executes or renders the content received from the interactive application and delivered in the Digital TV signal or, alternatively, requests the content from a server on the Internet.
- Whenever the user changes the channel that was watching, the remote agent will automatically connect with another interactive application in the new channel. The remote agent will be ready to receive the contents and/or commands of the new interactive application sent by the broadcaster tuned in the new channel.
- The remote agent can store information that allows identifying the device user. This information could have been obtained, for example:
   - Transferred from an interactive application; or
   - Introduced by the user manually via a configuration interface of the remote agent; or
   - Retrieved from the system's configurations and properties in the portable device.

This information can be used to automatically authenticate the user using other services on the Internet or to display, in the user portable device, a targeted content.

Thus, the proposed system aims to significantly expand the experience of the television viewer while watching a Digital TV program, synchronizing additional applications and multimedia content to the original program, transmitted by radio frequency, to multiple portable devices. So, the system of the present invention provides improvements related to the state of the technical art combining, but not limiting, the following factors:
(i) Allow the discovery/search, content transfer, communication and interaction between the TV and the portable device to be done by an interactive application transmitted by the air (non-resident on the Digital TV receiver) acting in accordance with a remote application (being executed on the portable device). This turns the solution different of other techniques which require all the communication to be managed by components pre-installed on the Digital TV receiver and exposed through the interfaces of these components.
(ii) The interactive application is transmitted on the Digital TV signal of the broadcaster together with the programming.

There is a synchronization of what is displayed on the portable device with the content transmitted on the Digital TV signal of the broadcaster.

It is, therefore, an object of the present invention a system for synchronization of content transmitted to a Digital TV receiver with multiple portable devices with access or without access to the Internet.

In a materialization of the system, this is a system comprising interactive application compliant with interactivity standards for Digital TV systems, transmitted by the broadcaster in its Digital TV signal. The interactive application is downloaded and executed in the interactive Digital TV receiver when tuned on the broadcaster's frequency. This interactive application uses the software interfaces available on the interactive Digital TV receivers to communicate with one or more compatible remote agents performed on the portable devices through a local data network.

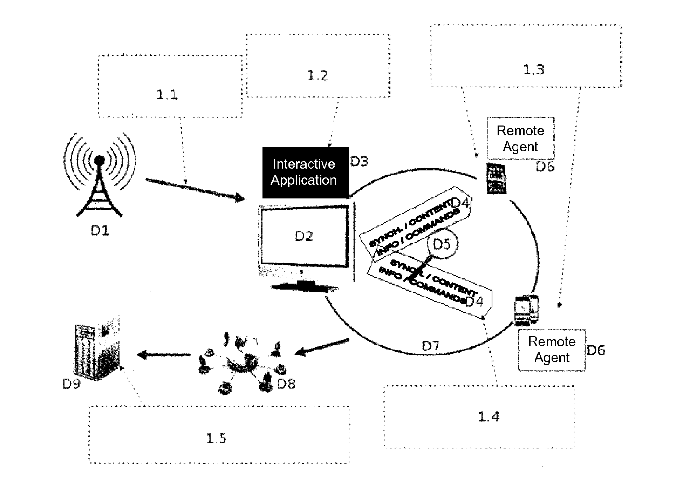

It is another object of the present invention a content transmission process to a Digital TV receiver with multiple portable devices with access or without access to the Internet. In a materialization of the present process, its steps are according to Fig. 1.

It is another object of the present invention a remote agent system, executing in a portable device and enabling such portable device to be discovered by an interactive application.

It is another object of the present invention an interactive application system which sets and/or allows to set a communication/connection with one or more remote agents systems running in one or more portable devices.

It is another object of the present invention an interactive Digital TV system comprising the systems of a previous object.

It is also object of the present invention the use of the system from a previous object for developing interactive Digital TV applications.

It is another object of the present invention a device as a set-top-box or TV with Digital TV converter, comprising the system of a previous object.

These and other objects of the invention will be immediately valued by the skilled in the art and by the companies with interest on the segment, and they will be described in enough details for their reproduction on the following description.

### Brief Description of the Drawings

Figure 1 shows a concretion of the system components and its relations to achieve an objective solution of the present invention, where the number reference 1.1 indicates: the interactive application is transmitted in the Digital TV broadcasting signal; 1.2 indicates: the interactive application D3 is downloaded and executed by the Interactive Digital TV receiver D2; 1.3 indicates: the interactive application discovers the portable devices in the local data network D7 in which the remote agent instances are being executed; 1.4 indicates: the interactive application sends the synchronization events, commands, information and contents D4 for the remote agents D6; and 1.5 indicates: when available a connection to the Internet D8, the remote agents can access the external servers D9 to retrieve information and additional/complementary content.

Next, we have the description of the elements from Figure 1:
D1 relates to a Broadcaster (RD);
D2 relates to a Interactive Digital TV receiver (RDTVi);
D3 relates to an Interactive application (IA) that is sent by the broadcaster (RD), which implements the MAGIC, communicates with AR on the MDP for synchronization of the multimedia contents or applications between the devices. It is optional for the interactive application (IA) to show some user interface on the Interactive Digital TV receiver (RDTVi);
D4 refers to synchronization events, commands, information and contents;
D5 relates to an Advanced Mechanism for Managing Interactivity, discovery and Connections (MAGIC - from portuguese: "Mecanismo Avanzado para Gerenciamento de Interactividade, descoberta e Conectividade), between devices in any types of data network or peer-to-peer connections;
D6 relates to a Remote Agent (RA) hosted on the portable device that renders the content in a synchronized way with the content received by the Interactive Digital TV receiver (RDTVi). AR implements the MAGIC mechanism thus to be able to be discovered and synchronized with the interactive application and receive the contents, information and commands from the interactive application;
D7 relates to a local data network;
D8 relates to a connection with the Internet; and
D9 relates to a service provider that offers accessible information and content through an Internet connection.

### Detailed Description

The examples shown herein have the purpose of only exemplifying one of the several ways to perform the invention, but not limiting the scope of thereof.

The present system comprises the process and architecture that provides mechanisms to the Digital TV broadcasters to display on mobile or portable devices multimedia content and information complementary to the TV signal displayed on the TV receiver to incorporate their TV services. These mechanisms contemplate the discovery (on the scope of a local data network), synchronization, transmission and automatic update of the information and multimedia contents displayed on the portable devices.

These mechanisms can be implemented by interactive TV applications, using the resources and software interfaces available on the standardized interactive Digital TV receivers, not requiring of proprietary functionalities to be embedded in the TV receiver. The architecture and the process together describe the elements that form the solution, their arrangement and the information exchanged between them.

The content synchronization system transmitted by interactive Digital TV, through multiple portable devices, with access or without access to the Internet, aims to enable the television viewer who has an interactive Digital TV receiver, tuned on a broadcast channel, and who has one or more portable devices, to receive, automatically and transparently, multimedia content, commands and/or applications on these devices, without the need of these devices being connected to the Internet.

The most common contents would be:
- Text
- Images
- Video
- Audio
- Applications and their data

The broadcaster develops an interactive application according to the interactivity standard defined for the Digital TV system (i.e.: Ginga, MHP, etc.), which has the algorithm required by the broadcaster, and sends it by radio frequency, together with the video, audio and other standardized information to the interactive Digital TV receivers compatible with the standard defined for the Digital TV system. This interactive application (IA), when in a running state in the interactive Digital TV receiver (RDTVi), it uses a mechanism named MAGIC (Advanced Mechanism for Managing Interactivity, discovery and Connections - from portuguese: "Mecanismo Avanzado para Gerenciamento de Interactividade, descoberta e Conectividade) to identify the portable devices which are sharing the same connectivity environment of the interactive Digital TV receiver and which have a remote agent (RA) installed. Once the device is located, and it is available, it starts, automatically and transparently, to transfer the content between the interactive application (IA) that is running on the interactive Digital TV receiver and the remote agent (RA) on the portable device. The content can be updated in the moment that new information and commands are sent by the broadcaster to the Digital TV receiver tuned on the channel.

If the television viewer/user changes the channel, the remote agent (RA) hosted on the portable device will be able to receive new contents and information from the new channel tuned on the Digital TV receiver if, in this new channel, it is also being transmitted another interactive application (IA) that uses the MAGIC.

The remote agent hosted on the portable device has the function to display and/or run the content delivered through the Digital TV receiver.

### Advantages

Different from the solutions considered state of the art nowadays, the proposed solution does not require access to the Internet.

This solution does not need a recognition phase, as such information is implicit on the interactive application.

The synchronization phase does not requires to access to the Internet as the contents and information can be transmitted together with the interactive application (IA) in the broadcasting signal. In turn, the interactive application (IA) can transfer these information and contents to the remote agents on the portable devices for the exhibition to the user.

### Advantages for the television viewer/user

The user experience for the television viewer/user can can be enhanced by the access to the additional content, with no interference on the main video that is being displayed on the Digital TV signal receiver.

### Advantages for the broadcaster

It will be able to provide a richer content to the television viewer/user making the audience loyal, generating new business models and expanding the range of opportunities to the producer of the content displayed.

### Advantages for the content producer

The invention can expand the capacity of the content producer to provide additional information to the user from its audiovisual content, with no prejudice to the original/main content that will be shown on the screen with integrity.

### Usage examples

Some usage scenarios of the invention are described below.

### Scenario 1

The television viewer/user watches a program in the Digital TV receiver and can watch simultaneously, in the portable device's screen, a multimedia content that is synchronized with such a program.

### Scenario 2

The television viewer/user can listen to an alternative audio of the content being transmitted by the broadcaster, synchronized with it, in the portable device.

### Scenario 3

The television viewer/user can use a multimedia application transmitted by the broadcaster in the portable device, in sync with the channel tuned in the Interactive Digital TV receiver. The application sent from the Interactive Digital TV receiver to the portable device can use the content received or access the content of a service provider in the Internet, and establish communications in multiple ways in order to enhance the television viewer/user experience.

### Scenario 4

The television viewer/user can access (in the portable device) to the information from the content watched, having as example, but not limiting: movie title, author, director, authors, movie description, release year and photos.

### Scenario 5

The television viewer/user can answer to questionnaires, tests, express their own opinions with feedback to a qualified server on the Internet or an information synchronization agent (such as the interactive application being executed by the Interactive Digital TV receiver).

Those skilled in the art will appreciate the knowledge herein showed and might use the invention within the embodiments disclosed and in other variants, enclosed in the attached claims scope.

## Claims

1. SYSTEM, **characterized in that** it comprises an interactive application compliant with the interactivity standards for digital TV systems, transmitted by a broadcaster in its Digital TV signal, the interactive application being downloaded and executed in the Digital TV receivers when tuned into the broadcaster frequency. The said interactive application uses the software interfaces available in the Digital TV interactive receivers to communicate with one or more compatible remote agents executed on portable devices through one local data network.

2. SYSTEM, according to claim 1, **characterized in that** it comprises a mechanism that enables to discover which are the portable devices present in the local data network where the Digital TV receiver is connected.

3. SYSTEM, according to claim 1, **characterized in that** it comprises a communication mechanism that enables sending information allowing to identify the Digital TV interactive receiver in which it is executing, as for example: manufacturer, model, serial number, etc.

4. SYSTEM, according to claim 1, **characterized in that** it comprises a communication mechanism that enables sending information allowing to identify the Digital TV interactive receiver's user, as for example: user/account identifier, name, age, e-mail, postal code, etc.

5. SYSTEM, according to claim 1, **characterized in that** it comprises a communication mechanism that enables sending commands to be executed by one or more remote agents present in one or more portable devices.

6. SYSTEM, according to claim 1, **characterized in that** it comprises a communication mechanism that enables receiving and executing commands sent by one or more remote agents present in one or more portable devices.

7. SYSTEM, according to claim 1, **characterized in that** it comprises a communication mechanism that enables transferring information and/or multimedia content to one or more remote agents present in one or more portable devices, for its immediate exhibition or storage for later exhibition.

8. SYSTEM, according to claim 1, **characterized in that** it comprises a communication mechanism that enables receiving information and/or multimedia content of one or more remote agents present in one or more portable devices for its immediate exhibition or storage for later display.

9. SYSTEM, according to claim 1, **characterized in that** the said remote agent implements the mechanism, according to claim 0, such that it enables the portable devices in which they are executed to be discovered by the interactive application, according to claim 1.

10. SYSTEM, according to claim 1, **characterized in that** the said remote agent implements the mechanism, according to claim 3, such that it receives information allowing to identify the Digital TV interactive receiver which is executing the interactive application, according to claim 1, wherein the information can be stored in the portable device, transferred to servers in the Internet or used to select the content to be presented for the user.

11. SYSTEM, according to claim 1, **characterized in that** the said remote agent implements the mechanism, according to claim 4, such that it receives the information identifying the user of the Digital TV interactive receiver which is executing the interactive application, according to claim 1, wherein the information can be stored in the portable device, transferred to servers in the Internet or used to select the content to be presented to the user.

12. SYSTEM, according to claim 1, **characterized in that** the said remote agent implements the mechanism, according to claim 5, such that it executes the commands that can be sent by the interactive application, according to claim 1, wherein the commands can include the display of content from a server in the Internet.

13. SYSTEM, according to claim 1, **characterized in that** the said remote agent has capacity to generate and send commands by means of a mechanism compatible, according to claim 6, wherein the commands can be generated in an automatic and transparent way or resulting from the user interaction with the portable device.

14. SYSTEM, according to claim 1, **characterized in that** the said remote agent implements the mechanism, according to claim 7, such that it processes, displays or stores the information and multimedia contents transmitted by the interactive application, according to claim 0.

15. SYSTEM, according to claim 1, **characterized in that** the said remote agent implements the mechanism, according to claim 0, such that it sends, to the interactive application, according to claim 0, information and/or multimedia contents, wherein such information and/or multimedia contents can be generated, and/or stored and/or retransmitted by the portable device.

16. SYSTEM, according to claim 1, **characterized in that** it comprises mechanism to retrieve and store personal information and user identification and passwords by using a configuration interface.

17. SYSTEM, **characterized in that** it allows the exhibition of content in portable devices in synchronous manner with the content and/or program transmitted in the interactive Digital TV signal, using a system, according to any one of the claims 0 to 0.

18. SYSTEM USE, according to one of the claims 1 to 17, **characterized in that** it enriches and increases significantly the television viewer/user experience when watching a program, TV commercial and/or TV channel, providing to the user more information and/or contents than those displayed in the TV receptor in a certain moment, in the portable device.

19. SYSTEM USE, according to one of the claims 1 to 17, **characterized in that** it enriches and increases significantly the television viewer/user experience when watching a program, TV commercial and/or TV channel, providing to the user interaction streams different from those displayed in the TV receptor in a certain moment, in the portable device.

20. SYSTEM USE, according to one of the claims 1 to 19, **characterized in that** it collects data about the user behavior or allows making the audience measure or confirming the visualization of a certain content/event, or being used to select the content displayed to the user based on the previous behavior.

21. SYSTEM USE, according to one of the claims 1 to 20, **characterized in that** it uses the information stored on the portable device, to display the content addressed to the user in the portable device or, optionally, in the Digital TV receiver, also considering the possibility to transmit to the servers in the Internet the information collected by the system defined in one of the claims de 1 to 20 and/or information stored in the portable device in order to select the content to be displayed to the user.

22. INTERACTIVE DIGITAL TV SYSTEM, **characterized in that** it comprises the system, according to one of the claims 1 to 21.

23. SYSTEM USE, according to one of the claims 1 to 20, for production of interactive applications for Digital TV.
